Europäisches Patentamt

European Patent Office

Office européen des brevets

(19)

(11) Publication number: 0 366 335
A2

# EUROPEAN PATENT APPLICATION

(12)

(21) Application number: 89310683.1

(51) Int. Cl.5: G06K 19/06

(22) Date of filing: 18.10.89

(30) Priority: 25.10.88 GB 8824965

(43) Date of publication of application:
02.05.90 Bulletin 90/18

(84) Designated Contracting States:
AT BE CH DE ES FR GB GR IT LI LU NL SE

(71) Applicant: THORN EMI plc
4 Tenterden Street
London W1A 2AY(GB)

(72) Inventor: Sansom, David John
27, Crofton Close Ottershaw
Chertsey Surrey KT16 0LR(GB)

(74) Representative: Fleming, Ian Alexander et al
THORN EMI Patents Limited The Quadrangle
Westmount Centre Uxbridge Road
Hayes Middlesex, UB4 0HB(GB)

(54) Magnetic identifier.

(57) A magnetic identifier for use in an electromagnetic tag comprises a number of permalloy switching elements 1, 2 and 3 disposed on a substrate 4, such as silicon. Respective biasing members 5, 6 and 7 are provided for exerting magnetic bias fields on the elements 1, 2 and 3. The bias fields may differ from one another in any convenient manner so as to cause the elements 1, 2 and 3 to respond in a non-uniform manner to an interrogating field.

The arrangement permits a relatively large number of codes to be identified by the use of a small number of elements and a small number of pulse sequences in the interrogating field.

FIG.1(a)

FIG.1(b)

## MAGNETIC IDENTIFIER

This invention relates to magnetic identifiers, and it relates especially, though not exclusively, to such identifiers as may be used to convey information about an individual (in an access control system) or a product (in an electronic article surveillance (EAS) system such as may be used in retail stores) which are able to indicate more than just the presence or absence of a non-cancelled magnetic ribbon incorporated in 6 label or tag associated with the person or article as the case may be.

At least in the circumstances where it is desired that such information be detected remotely from the person or article, as the case may be, and if it is assumed that some kind of label is to be closely associated with that person or article, it is required that the label, in response to an interrogating signal, be capable of generating reproducibly a relatively complex pulse pattern. The pattern should correspond to one of a number of identification codes.

It has been proposed to achieve the above objective by incorporating several magnetic ribbons of different coercivities into a single tag. However, it is difficult to achieve a sufficient number of distinguishable pulses with such a system, at least if readily available materials are used, if the magnetic field associated with the interrogating signal is maintained at a reasonable level, i.e. less than 10 oersteds.

The present invention aims to overcome the above-mentioned difficulty and, in accordance with the invention, there is provided a magnetic identifier bearing a plurality of regions of magnetically soft material and respective means for biasing said regions to cause them to respond differently to a common interrogating signal.

In order that the invention may be clearly understood and readily carried into effect, some embodiments thereof will now be described, by way of example only, with reference to the accompanying drawings of which:-

Figure 1(a) shows schematically, in plan view, an experimental tag for use in accordance with one example of the invention,

Figure 1(b) shows, in plan view, a tag as developed for practical use, and

Figures 2, 3 and 4 show the response of various tags to an interrogating signal.

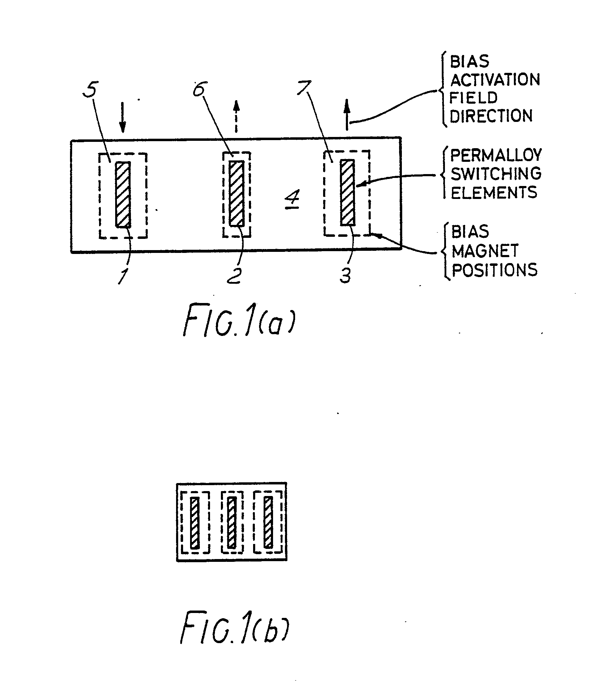

Referring now to Figure 1(a), it is indicated how different bias fields may be applied to two or more regions of a magnetically soft layer so that each region switches just after the AC field associated with an interrogating signal passes through a level sufficient to cancel the bias field, when the resultant field equals the coercive force of the soft magnetic layer. More than one pulse is then detected during the rise of the field towards the positive peak value, and also during the other half-cycle as the field approaches the negative peak value.

This may be achieved by the use of elements of plated permalloy, arranged on a silicon substrate as the low-coercivity switching layer, in combination with sections of magnetic tape magnetised to produce bias fields of up to 3 oersteds.

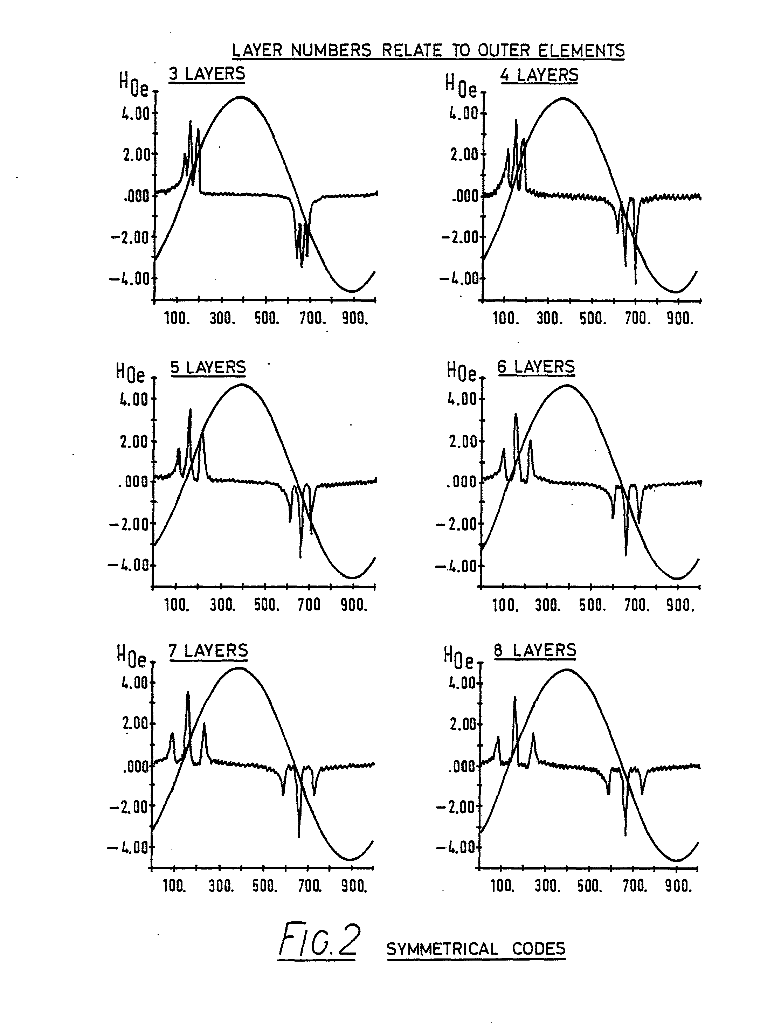

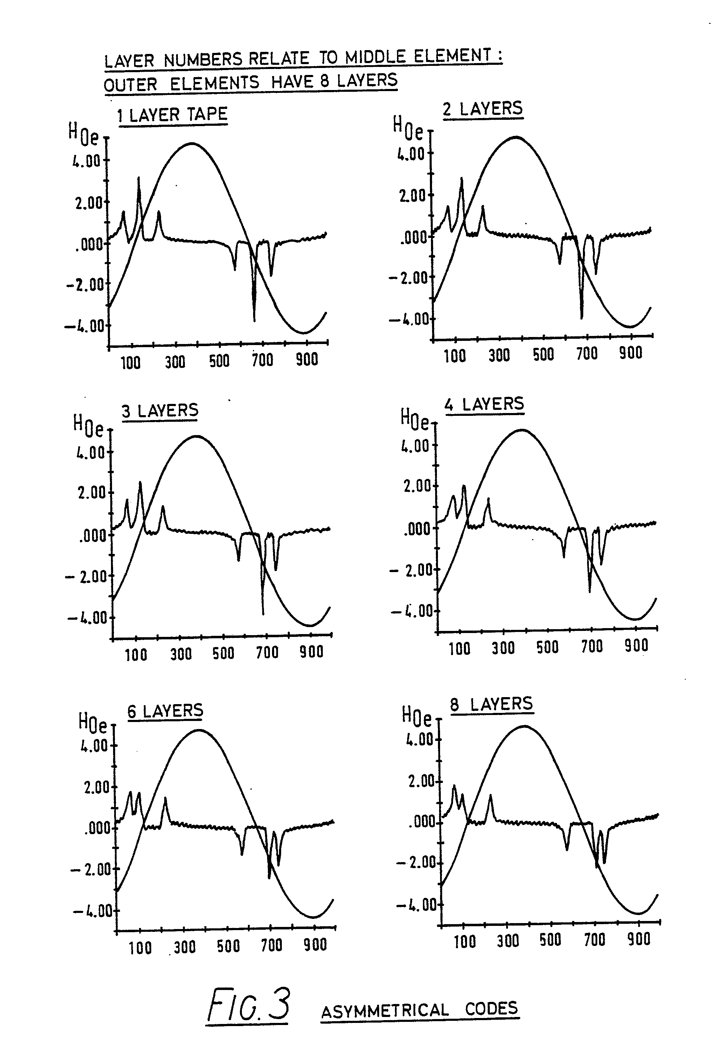

As shown in Figure 1a, three plated permalloy switching elements 1, 2 and 3, each 17mm long and 3mm wide, are disposed on a common substrate 4. Respective biasing members each in the form of one or more layers of magnetic tape are disposed on the opposite surface of the substrate 4 to elements 1, 2 and 3, the positions of the biasing members being indicated by the dashed rectangles 5, 6 and 7. It can be seen that each biasing member overlies, or is juxtaposed with, a respective switching element, and the bias fields exerted by the biasing members are caused to differ from one another in any convenient manner. For example, some members may include more layers of tape than others, or the magnetic material used to fabricate the members may differ from member to member. Also, the dimensions of the various biasing members can differ. Combinations of the aforementioned parameters, and others if required, can of course be used. In the case of Figure 1(a), the member 6 is only 5mm wide whereas the members 5 and 7 are each 10mm wide. All these members are 20mm long. Different pulse positions were obtained by varying the number of tape layers used, giving various pulse patterns as shown in Figures 2 and 3; Figure 2 relating to symmetrical arrangements, in which there is zero bias applied to the central element 2, and Figure 3 to asymmetrical arrangements.

The outer switching elements 1 and 3 of Figure 1a were biased to about 2.5 oersteds in opposite directions to produce the results of Figure 3, using several layers of ferric oxide recording tape (20 x 10mm) with a total coating thickness of approximately 150 micron. The centre element 2 was biased with between 1 and 8 layers of the same tape, each 20 x 5mm, to produce a range of bias fields up to 1.6 oersteds.

The presence of separation layers of up to 0.5mm between the magnetic biasing layers and the switching elements has little effect on the average bias fields, provided the magnetic poles of the layers are further than about 1mm from the switching elements.

For applications where the tag can be oriented and positioned correctly in relation to the interrogation field (e.g. access control), a large number of codes are possible using only a small number of switching elements and bias field values.

For example: Assume a peak A.C. field of 5 oersted, a coercivity less than or equal to 1 oerst, maximum bias field of 2 oersted, bias increments of 0.25 oerst, but no two bias values closer than 1 oersted. The number of possible codes available by using the presence or absence of up to 5 pulses is then as follows:-

| | number of codes | | total number | |
|---|---|---|---|---|
| | symmetrical | others | invertible | oriented tag |
| 1 pulse: | 1 + | 8 | 9 | 17 |
| 2 pulses: | 7 + | 42 | 49 | 91 |
| 3 pulses: | 5 + | 80 | 85 | 165 |
| 4 pulses: | 6 + | 32 | 38 | 70 |
| 5 pulses: | 1 + | | 1 | 1 |
| | $\overline{20}$ | $\overline{162 \; (x2)}$ | $\overline{182}$ | $\overline{(344)}$ |

Examples of symmetrical 3-pulse codes are shown in Figure 2 and of non-symmetrical 3-pulse codes in Figure 3.

A much larger number of codes becomes possible with larger drive fields, and therefore more increments of the bias values, and/or more switching elements.

More codes are also possible if more than one pulse amplitude level is used.

Problems may arise with tags for EAS because tag orientation relative to the interrogation field is not fixed, and can be at any angle. Pulses can always be detected by the use of three sets of mutually orthogonal pick-up coils, but a shift in time occurs for the peak positions as the angle varies, making interpretation of data more difficult.

A means of ensuring the presence of pulses in a single-axis coil system is to use three sets of switching elements with easy axes at right angles to each other.

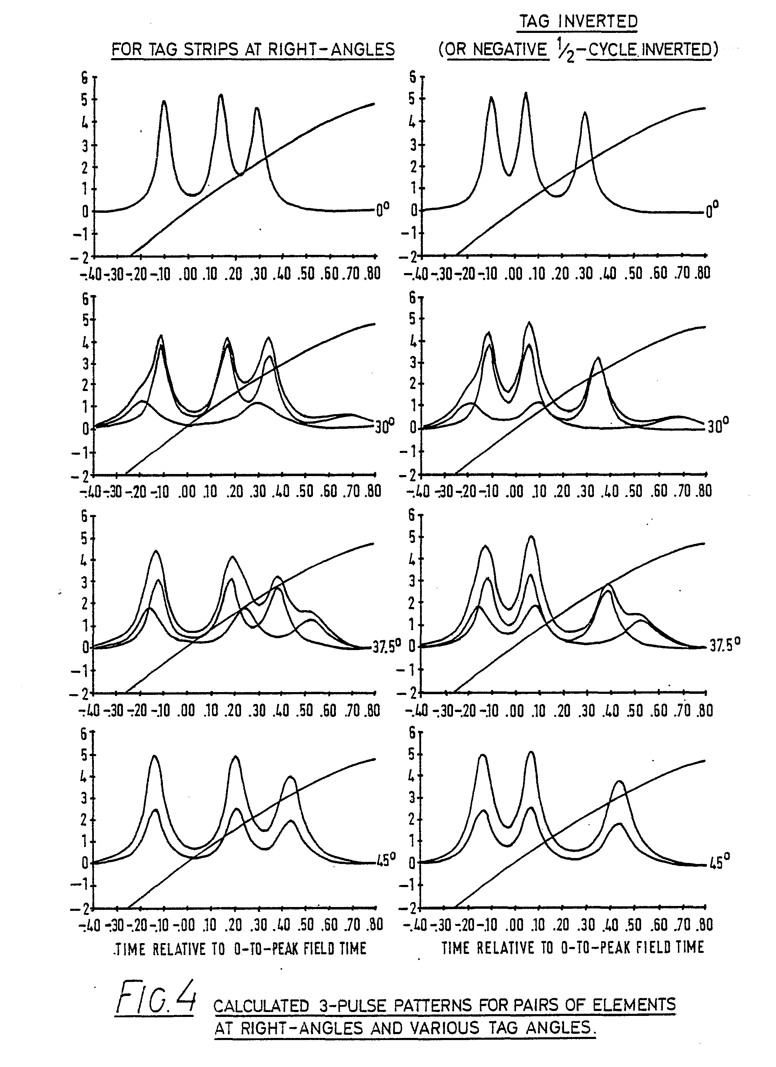

The effect of using pairs of elements at right angles to each other in one plane only has been calculated, as the tag angle varies from 0 to 90 degrees relative to the coil axis, in the tag plane. An example of the effect on the pulse pattern is shown in Figure 4, showing that extra pulses may be introduced at some angles and bias values, as well as altering the absolute pulse positions. This variability limits the number of distinguishable tag codes considerably.

The pulse patterns shown in the right hand column of Figure 4 correspond to the same tag as shown in the left hand column, but inverted, so limiting the possible number of codes even further.

A simple coding system to give a limited number of tag identity codes, even with angular variation, is to fix the bias of the outer elements in Figure 1(b) at large equal and opposite values, and choose from a limited number of bias values for the middle element. When interrogated, the relative position of the middle pulse in relation to the standard outer pulses identifies which tag code is present. The pulse patterns for various codes are as shown in Figure 3, for a single-axis 3-element system with easy axis no more than 45 degrees from the field axis.

Although the present invention has been described with respect to specific embodiments, it should be realised that modifications may be effected whilst remaining within the scope of the invention. For example, the identifier need not necessarily comprise of three elements and other configurations of elements may equally be adopted. Furthermore, alternative materials may be used for the elements and substrate other than those specified.

**Claims**

1. A magnetic identifier comprising a plurality of elements of magnetically soft material and respective biasing means for biasing the regions for enabling the regions to exhibit a non uniform response to a common interrogating signal.

2. An identifier according to Claim 1 wherein the elements and the biasing means are supported on a silicon substrate.

3. An identifier according to Claim 1 or Claim 2 wherein the elements comprise permalloy material.

4. An identifier according to any one of Claims 1 to 3 wherein the biasing means comprise a plurality of layers of magnetic material.

5. An identifier according to any one of the preceding claims wherein at least one of the biasing means has a surface area differing from the surface area of at least one other of the biasing means.

6. An identifier according to any one of the preceding claims wherein at least one of the biasing means comprises a magnetic material having a coercivity differing from the coercivity of at least one other of the biasing means.

7. An identifier according to any one of the preceding claims wherein the plurality of elements are arranged as an array and wherein the biasing means are arranged such that the outermost elements of the array have substantially equal and opposite biases applied thereto and differing from the bias applied to the other elements.

8. An identifier according to any one of the preceding claims wherein the plurality of elements comprise a set of elements, the elements of the set having the easy axis of magnetisation of the magnetically soft material in substantial alignment, the identifier comprising a plurality of sets of the elements disposed such that the easy axes of the sets are disposed substantially orthogonal with respect to each other.

9. An identifier according to any one of the preceding claims wherein the plurality of elements comprises three elements.

FIG.1(a)

FIG.1(b)

EP 0 366 335 A2

FIG.2   SYMMETRICAL CODES

LAYER NUMBERS RELATE TO MIDDLE ELEMENT :
OUTER ELEMENTS HAVE 8 LAYERS

FIG.3    ASYMMETRICAL CODES

FOR TAG STRIPS AT RIGHT-ANGLES

TAG INVERTED
(OR NEGATIVE ½-CYCLE INVERTED)

FIG.4 CALCULATED 3-PULSE PATTERNS FOR PAIRS OF ELEMENTS AT RIGHT-ANGLES AND VARIOUS TAG ANGLES.